# EUROPEAN PATENT SPECIFICATION

(11) **EP 2 815 211 B1**
(45) Date of publication and mention of the grant of the patent: **29.03.2017**
(21) Application number: 13702484.0
(22) Date of filing: 05.02.2013
(51) Int. Cl.: G01D 5/14

(54) **ROTARY POSITION SENSOR DEVICE**
DREHPOSITIONSSENSOR
DISPOSITIF CAPTEUR DE POSITION ROTATIF

(30) Priority: 28.02.2012 FR 1251798
(43) Date of publication of application: 24.12.2014
(73) Proprietor: Vishay S.A., 06003 Nice Cedex 1 (FR)
(72) Inventor: LANOT, Jean-Michel, F-06800 Cagnes sur Mer (FR)
(74) Representative: Manitz, Finsterwald & Partner GbR
(86) International application number: PCT/EP2013/052206
(87) International publication number: WO 2013/127604

(56) References cited:
- EP-A2- 1 083 406
- DE-A1-102005 014 509
- DE-C1- 10 201 875
- FR-A1- 2 855 874

## Description

### FIELD

The present disclosure relates to rotary position sensor devices.

### BACKGROUND

The statements in this section merely provide background information related to the present disclosure and may not constitute prior art.

One type of rotary position sensor device is a resolver which includes a centered rotor coil and two peripheral stator coils which are offset by 90° with respect to one other. The rotor coil is excited by an AC voltage thereby inducing AC voltage signals in the two stator coils. The amplitudes of the induced voltages depend on the rotational position of the rotor coil and represent the Sine- and Cosine-values of this rotational position. Thus, the two signals are indicative of the rotational position of the stator coil. The rotor coil might, for instance, be attached to a rotatable shaft for which an angular position is to be determined. Resolvers are used in aeronautics and in industrial applications by way of example.

Another type of rotary position sensor device is a rotary variable differential transformer (RVDT) which also makes use of a rotor coil or rotor core and two stator coils and which produces signals similar to those of a resolver. The induced AC signals of a resolver or an RVDT are fed into a resolver-to-digital converter or into a rotary variable differential transformer converter, respectively, which converter calculates the angular position of the rotor coil from the fed signals.

Resolvers and RVDTs, however, are heavy and high in price. On the other hand, the converters for such resolvers and RVDTs are customary parts and the signals output by these converters are standard in the above-mentioned applications. As a consequence, design engineers would like to adhere to these converters which however rely on the resolvers' respectively the RVDTs' output signals.
DE 10201875 C1 discloses a rotary position sensor according to the preamble of claim 1.
FR 2855874 A discloses an angular position sensor that comprises a rotating part which creates a variable magnetic flux, a fixed part for supporting two sensors each having an output current, the first of the sensors having an output current having discontinuities when the magnetic flux passes through zero, the second of the sensors being subjected to a second magnetic flux, shifted by 90° relative to the first flux and having an output current that is a continuous function of the magnetic flux, and a device for adding the currents from the two sensors.
DE 102005014509 A1 discloses a sensor assembly for detecting a rotary angle of a rotating object. At least a first and a second sensor are coupled in cascade such that the sensor signal of the first sensor is transformed into a first control current and applied to the second sensor, wherein a multiplication of the two angle dependencies of the first and second sensors is received.

One object of this disclosure is to resolve the above-described conflict.

### SUMMARY

Accordingly, the present disclosure provides a rotary position sensor device that comprises a rotary position sensor and an electronic circuit. The rotary position sensor includes a rotatable magnet creating a magnetic field and at least one pair of first and second peripheral magnetic field sensors. The magnetic field sensors of each pair are offset by 90° to each other and produce two signals which correspond to Sine- and Cosine-values of the rotational position of the magnet. The electronic circuit is configured to modulate the two signals of each pair with a time-dependent sinusoidal function and to produce at least one pair of modulated output signals.

In another feature, the magnetic field within the magnet is a parallel magnetic field, i.e. the magnet is magnetized along a single axis.

In an advantageous feature, the magnet is magnetized along an axis lying within the plane of rotation of the magnet.

In still another feature, the magnet is a flat disk, a cylinder or a ring.

In another feature, the sinusoidal function is provided by an internal oscillator or by an external excitation source.

In yet another feature, the magnet is rotatable about an axis of rotation, wherein the magnet and the magnetic field sensors of the at least one pair of magnetic field sensors are positioned in a common plane or are distributed over different planes which are parallel to one other, which at least one plane is perpendicular to the axis of rotation.

In another feature, the first magnetic field sensors of first and second pairs of magnetic field sensors as well as the second magnetic field sensors of the first and second pairs of magnetic field sensors are positioned such that they produce two pairs of signals which are inverted with regard to each other.

In an additional feature, the first magnetic field sensors of first and second pairs of magnetic field sensors as well as the second magnetic field sensors of the first and second pairs of magnetic field sensors are positioned diametrically opposed to each other.

In another feature, the electronic circuit is configured such that the signals of the first magnetic field sensors as well as the signals of the second magnetic field sensors are subtracted from one another to produce a respective differential signal.

In an advantageous feature, the magnetic field sensors of the first and second pairs are positioned in a common plane being perpendicular to the axis of rotation of the magnet and lying at a distance from the magnet, wherein each of the magnetic field sensors has an active axis being parallel to the axis of rotation of the magnet. In other words, the magnetic field sensors are arranged in a common plane being parallel to the plane of rotation of the magnet in a distance from the magnet along the axis of rotation of the magnet. The active axis of the magnetic field sensors defines the direction along which the respective magnetic field sensor is sensitive to the magnetic field, i.e. the respective magnetic field sensor senses only the component of the magnetic field projected on its active axis. In this embodiment the active axes of the magnetic field sensors are parallel to each other and parallel to the axis of rotation of the magnet.

In a further feature, the electronic circuit is configured to first produce the two differential signals and then to modulate the two differential signals, wherein in total only one pair of modulated output signals is generated on the basis of the two pairs.

In another feature, the rotary position sensor device is configured such that each of a plurality of pairs of magnetic field sensors produces a pair of modulated output signals independently from each other.

In a further aspect, the present disclosure provides an apparatus comprising a rotary position sensor device in accordance with the foregoing and a resolver converter or a rotary/linear variable differential transformer (RVDT/LVDT) converter, the output signals of the rotary position sensor device being directly fed into the converter.

The rotary position sensor device of the present disclosure basically imitates the output signals of a resolver or an RVDT and thus can directly interface with common resolver or RVDT/LVDT converters. As a consequence, the rotary position sensor device of the present disclosure is suited to readily replace resolvers and RVDTs known in the prior art without further ado. This is made possible by modulating or multiplying the Sine- and Cosine-signals produced by the rotary position sensor with the time-dependent sinusoidal function. In contrast to resolvers or RVDTs, the rotary position sensor device of the present disclosure operates without using heavy and costly excitation and pick-up coils. As another advantage, the output signals of the rotary position sensor device of the present disclosure are absolute position signals which do not require calibration of the rotary position sensor device even if the rotatable magnet has moved while the power supply is shut off (so-called true power on sensor).

The rotary position sensor as such, including a pair of magnetic field sensors which pick up the magnetic field of a rotatable magnet, is known from European patent application EP 1 083 406 A2, for example.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.
Fig. 1 is an equivalent circuit of a rotary position sensor device in accordance with the present disclosure according to a first embodiment;
Fig. 2 is an equivalent circuit of a rotary position sensor device in accordance with the present disclosure according to a second embodiment;
Fig. 3 is a detail of the equivalent circuit of Fig. 2; and
Fig. 4 is another detail of the equivalent circuit of Fig. 2.

### DETAILED DESCRIPTION

The following description is merely exemplary in nature and is not intended to limit the present disclosure, application, or uses. It should be understood that throughout the drawings, corresponding reference numerals indicate like or corresponding parts and features.

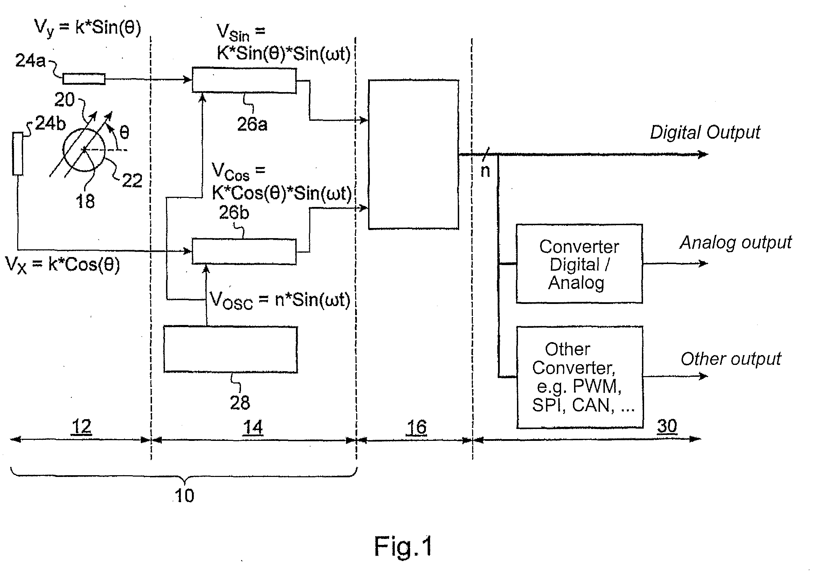

Referring now to Fig. 1, a rotary position sensor device 10 is illustrated which includes a rotary position sensor 12 and an electronic circuit 14. The rotary position sensor device 10 is connected to a resolver-to-digital converter or to a rotary/linear variable differential transformer signal conditioner 16.

The rotary position sensor 12 comprises a centered rotatable magnet 18 which creates a parallel magnetic field 20 within the magnet 18 and in its vicinity, i.e. the magnet 18 is diametrically magnetized in a parallel fashion. The magnet 18 is rotatable about an axis of rotation 22 and may be a flat disk, a cylinder or a ring. The magnet 18 extends within a plane being perpendicular to the axis of rotation 22. Additionally, the rotary position sensor 12 comprises a pair of magnetic field sensors 24a, 24b such as Hall-sensors. The magnetic field sensors 24a, 24b are radially displaced from the magnet 18 by the same distance and are angularly offset by 90° to each other.

Each of the magnetic field sensors 24a, 24b is capable of producing a voltage signal which is indicative of the strength of the magnetic field 20 at the position of the respective magnetic field sensor 24a, 24b. Since the two magnetic field sensors 24a, 24b are offset by 90° to each other the two voltage signals represent the Sine- and Cosine-values of the rotational position θ of the magnet 18 and thus the rotational position of a rotatable shaft or such like to which the magnet 18 is attached. The two signals are in quadrature, i.e. offset by 90° in phase, as the magnet 18 is turned.

The two magnetic field sensors 24a, 24b can be arranged in the same plane or in two parallel planes, each plane being perpendicular to the axis of rotation 22. The magnet 18, on the one hand, and the two magnetic field sensors 24a, 24b, on the other hand, can be arranged in the same plane or in different planes.

The electronic circuit 14 comprises two multipliers 26a, 26b, each of which are connected to one of the two magnetic field sensors 24a, 24b and to a common excitation source 28 which provides a time-dependent sinusoidal function Vosc = n Sin(ωt). The excitation source 28 may be an internal oscillator or an external voltage source. In other words, the Sine-signal V_{y} = k Sin(θ) of the magnetic field sensor 24a is modulated with the sinusoidal function by means of the multiplier 26a, and the Cosine-signal Vₓ = k Cos(θ) of the magnetic field sensor 24b is modulated with the sinusoidal function by means of the multiplier 26b.

In this way, the rotary position sensor device 10 creates two time-modulated output signals V_{Sin}, V_{Cos} which are identical to output signals which would be created by a common resolver or a common rotary variable differential transformer (RVDT) detecting the angular position of a rotatable shaft or such like. Hence, the rotary position sensor device 10 can be interfaced with the common resolver-to-digital converter or rotary/linear variable differential transformer signal conditioner 16 which is usually connected in series to a resolver or an RVDT. In short, the rotary position sensor device 10 can simply replace a resolver or an RVDT without further changes being necessary. The resolver-to-digital converter or rotary/linear variable differential transformer signal conditioner 16 is configured inter alia to demodulate the time-modulated output signals of the rotary position sensor device 10.

The device 10 is of low weight, has low power consumption and allows high speed operation. The rotary position sensor 12 is a contactless type sensor and is thus less susceptible to failure. In addition, the rotary position sensor 12 does not require any magnetic core or field concentrator, and it is a true power on sensor. Further, the rotary position sensor device 10 does not make use of any microcontroller having software and/or programmable components which is a significant advantage for aeronautics applications where electronics must be DO 178 compliant.

The digital output signal of the converter or signal conditioner 16 may be further processed by further electronics 30, and thereby be alternatively or additionally converted into an analog signal, bus signal and/or any other standard or non-standard signal. The converter or signal conditioner 16 and/or the further electronics 30 may be a part of the rotary position sensor device 10 or designed separately from the device 10.

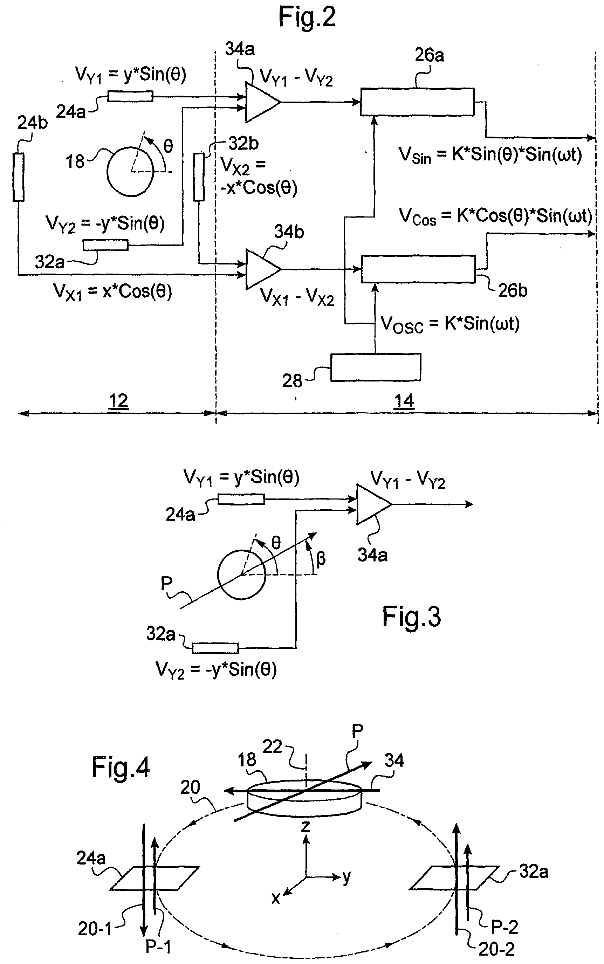

In principle, the rotary position sensor device 10 requires a pair of magnetic field sensors (poles) 24a, 24b only. However, the device 10 may include more than one such pair. Fig. 2 shows an embodiment of the device 10 including the same kind of magnet 18, the first pair of magnetic field sensors 24a, 24b and a second such pair of magnetic field sensors 32a, 32b. The first and second pairs of magnetic field sensors 24a, 24b, 32a, 32b are positioned diametrically opposed to each other and offset by 180°, respectively. This means that the first magnetic field sensor 24a of the first pair and the first magnetic field sensor 32a of the second pair are positioned diametrically opposed to each other. Likewise, the second magnetic field sensor 24b of the first pair and the second magnetic field sensor 32b of the second pair are positioned diametrically opposed to each other.

Each of the magnet field sensors 24a, 24b, 32a, 32b has an active axis, i.e. an axis of sensitivity to the magnetic field 20. In the embodiment of Fig. 2, when the magnetic field sensors 24a, 24b, 32a, 32b and the magnet 18 are positioned in a common plane, the active axes may lie within this common plane such that the active axes of diametrically opposed magnetic field sensors 24a, 32a or 24b, 32b coincide but extend along opposing directions. As such the magnet 18 acts differently, i.e. with different sign, on the respective diametrically opposed magnetic field sensors 24a and 32a or 24b and 32b. For example, if the magnetic field sensor 24a "sees" a north pole of the magnet 18 and delivers a positive voltage, the diametrically opposed magnetic field sensor 32a "sees" a south pole and delivers a negative voltage. As a result of this configuration, the first and second pairs of magnetic field sensors 24a, 24b, 32a, 32b produce signals which are inverted with regard to one other.

The Sine-signal V_{Y1} = y Sin(θ) of the first magnetic field sensor 24a of the first pair and the inverted Sine-signal V_{Y2} = -y Sin(θ) of the first magnetic field sensor 32a of the second pair are input into a first differential amplifier 34a, and the Cosine-signal V_{X1} = x Cos(θ) of the second magnetic field sensor 24b of the first pair and the inverted Cosine-signal V_{X2} = -x Cos(θ) of the second magnetic field sensor 32b of the second pair are input into a second differential amplifier 34b. Thus, the signals of the first magnetic field sensors 24a, 32a as well as the signals of the second magnetic field sensors 24b, 32b are respectively subtracted from one another. The resulting two differential signals output by the differential amplifiers 34a, 34b are V_{Y1} - V_{Y2} = 2 y Sin(θ) and V_{X1} - V_{X2} = 2 y Cos(θ).

As generally shown in Fig. 3, the configuration of Fig. 2 (magnetic field sensors 24a and 32a or 24b and 32b being positioned diametrically opposed to each other) can be used to cancel out an external magnetic perturbation P. In case of an external magnetic perturbation P, the configuration according to the embodiment of Fig. 2 generally has the advantage that the perturbation P Sin(β) (or P Cos(β)) contributes with like signs to the signals V_{Y1} and V_{Y2} (or V_{X1} and V_{X2}) and thus is being cancelled out in the differences V_{Y1} - V_{Y2} and V_{X1} - V_{X2}. For example, for the magnetic field sensors 24a, 32a the difference gives: V_{Y1} - V_{Y2} = (y Sin(θ) + P Sign(β)) - (-y Sin(θ) + P Sin(β)) = 2 y Sin(θ). As a consequence, an external magnetic perturbation P does not have any negative influence or only little negative influence on the measurement accuracy of the rotary position sensor device 10.

More specifically, as schematically shown in Fig. 4 for the first magnetic field sensor 24a of the first pair and the first magnetic field sensor 32a of the second pair, the magnetic field sensors of both pairs can be positioned in a common plane being perpendicular to the axis of rotation 22 (z-axis) of the rotatable magnet 18 and lying at a distance from the magnet 18 and its plane of rotation. The magnet 18 again is magnetized along a single axis 34 being perpendicular to the axis of rotation 22 and thus lying within the plane of rotation of the magnet 18 (x/y-plane). Each of the magnetic field sensors 24a, 32a (and 24b, 32b not shown) has an active axis being parallel to the axis of rotation 22 of the magnet 18, i.e. being parallel to the z-axis shown in Fig. 4. The magnetic field 20 created by the rotatable magnet 18 outside of the magnet 18 extends not only within the plane of rotation of the magnet 18 (x/y-plane) but also above and below the magnet 18, i.e. in a positive and negative z-direction.

As such the magnet field sensor 24a is sensitive to the component 20-1 of the magnetic field 20 projected on its active axis (z-axis), and the magnetic field sensor 32a is sensitive to the component 20-2 of the magnetic field 20 projected on its active axis (z-axis). Since the magnetic field 20 must follow a closed path (loop) outside of the magnet 18 the components 20-1, 20-2 detected by the magnetic field sensors 24a, 32a have different signs as shown in Fig. 4. In contrast, an external magnet perturbation P is created outside of the rotary position sensor device 10 (for example by heavy electrical motors, large coils or electromagnets arranged at a great distance compared to the distance between the magnetic field sensors 24a, 32a and the magnet 18). The external magnetic perturbation P therefore extends uniformly across the rotary position sensor device 10 and thus effects the magnetic field sensors 24a, 32a similarly and with the same sign. Fig. 4 shows the component P-1 of the external magnetic perturbation P projected on the active axis of the magnetic field sensor 24a and the component P-2 of the external magnetic perturbation P projected on the active axis of the magnetic field sensor 32a, both components P-1, P-2 having the same sign. Therefore, as explained in connection with Fig. 3, subtracting the signals of the magnetic field sensors 24a and 32a from one another has the effect of cancelling out the external magnetic perturbation P.

In the embodiment of Fig. 2, first, the differential signals are built, and then, the differential signals are modulated with the time-dependent function. In principle, it is also possible that each of the signals of the magnetic field sensors 24a, 24b, 32a, 32b is modulated with the time-dependent function first and then differential signals are built. In both cases the number of signals output by the rotary position sensor device 10 is two (based on four magnetic field sensor signals).

It should be noted that the second pair of magnetic field sensors does not have to be used for operating the rotary position sensor device in a differential mode as is shown in Fig. 2. It is also possible to use the second pair or several of such pairs to produce modulated output signals independently from the first pair and/or independently from each other. The various pairs may then be offset from each other by any angle. In this case, redundant modulated signals can be provided to reduce the failure rate of the rotary position sensor device which is particularly advantageous for applications requiring a high safety level.

Those skilled in the art can now appreciate from the foregoing description that the broad teachings of the present disclosure can be implemented in a variety of forms. Therefore, while this disclosure has been described in connection with particular examples thereof, the true scope of the disclosure should not be so limited since other modifications will become apparent to the skilled practitioner upon a study of the drawings, the specification and the following claims.

## Claims

1. A rotary position sensor device (10) comprising:
a rotary position sensor (12) including
a rotatable magnet (18) creating a magnetic field (20); and
at least one pair of first and second peripheral magnetic field sensors (24a, 24b), the magnetic field sensors of each pair being offset by 90° to each other and producing two signals which correspond to Sine- and Cosine-values of the rotational position (θ) of the magnet; and
an electronic circuit (14) configured to produce at least one pair of modulated output signals,
**characterized in that** the electronic circuit (14) is further configured to modulate the two signals of each pair of magnetic field sensors (24a, 24b) with a time-dependent sinusoidal function.

2. The rotary position sensor device of claim 1, wherein the magnetic field (20) is a parallel magnetic field.

3. The rotary position sensor device of claim 1 or claim 2, wherein the magnet (18) is magnetized along an axis lying within the plane of rotation of the magnet (18).

4. The rotary position sensor device of any one of the claims 1 to 3, wherein the magnet (18) is a flat disk, a cylinder or a ring.

5. The rotary position sensor device of any one of the claims 1 to 4, wherein the sinusoidal function is provided by an internal oscillator or by an external excitation source (28).

6. The rotary position sensor device of any one of the claims 1 to 5, wherein the magnet (18) is rotatable about an axis of rotation (22), wherein the magnet (18) and the magnetic field sensors (24a, 24b) of the at least one pair of magnetic field sensors are positioned in a common plane or are distributed over different planes which are parallel to each other, which at least one plane is perpendicular to the axis of rotation (22).

7. The rotary position sensor device of any one of the claims 1 to 6, wherein the rotary position sensor device comprises a first pair of first and second magnetic field sensors (24a, 24b) and a second pair of first and second magnetic field sensors (32a, 32b), wherein the first magnetic field sensors (24a, 32a) of the first and second pairs as well as the second magnetic field sensors (24b, 32b) of the first and second pairs are positioned such that they produce two pairs of signals which are inverted with regard to each other.

8. The rotary position sensor device of any one of the claims 1 to 7, wherein the rotary position sensor device comprises a first pair of first and second magnetic field sensors (24a, 24b) and a second pair of first and second magnetic field sensors (32a, 32b), wherein the first magnetic field sensors (24a, 32a) of the first and second pairs as well as the second magnetic field sensors (24b, 32b) of the first and second pairs are positioned diametrically opposed to each other.

9. The rotary position sensor device of claim 7 or claim 8, wherein the electronic circuit (14) is configured to subtract the signals of the first magnetic field sensors (24a, 32a) from one another to produce a first differential signal and to subtract the signals of the second magnetic field sensors (24b, 32b) from one another to produce a second differential signal.

10. The rotary position sensor device of claim 9, wherein the magnetic field sensors (24a, 24b, 32a, 32b) of the first and second pairs are positioned in a common plane being perpendicular to the axis of rotation (22) of the magnet (18) and lying at a distance from the magnet (18); and wherein each of the magnetic field sensors (24a, 24b, 32a, 32b) has an active axis being parallel to the axis of rotation (22) of the magnet (18).

11. The rotary position sensor device of claim 9 or claim 10,
wherein the electronic circuit (14) is configured to first produce the two differential signals and then to modulate the two differential signals, wherein in total only one pair of modulated output signals is generated on the basis of the signals of the two pairs of magnetic field sensors.

12. The rotary position sensor device of any one of the claims 1 to 11, wherein the rotary position sensor device (10) is configured such that each of a plurality of pairs of magnetic field sensors (24a, 24; 32a, 32b) produces a pair of modulated output signals independently from each other.

13. An apparatus comprising the rotary position sensor device (10) of any one of the claims 1 to 12 and a resolver converter or a rotary/linear variable differential transformer converter (16), the output signals of the rotary position sensor device being directly fed into the converter.

14. The apparatus of claim 13, wherein the resolver converter or rotary/linear variable differential transformer converter (16) is configured to demodulate the output signals of the rotary position sensor device.

## Patentansprüche

1. Drehpositionssensorvorrichtung (10), umfassend:
einen Drehpositionssensor (12), der enthält
einen drehbaren Magnet (18), der ein Magnetfeld (20) erzeugt; und
mindestens ein Paar erster und zweiter peripherer Magnetfeldsensoren (24a, 24b), wobei die Magnetfeldsensoren jedes Paars zueinander um 90° versetzt sind und zwei Signale erzeugen, welche Sinus- und Kosinus-Werten der Drehposition (θ) des Magnets entsprechen; und
eine elektronische Schaltung (14), die ausgestaltet ist, um mindestens ein Paar modulierter Ausgabesignale zu erzeugen,
**dadurch gekennzeichnet, dass**
die elektronische Schaltung (14) ferner ausgestaltet ist, um die zwei Signale von jedem Paar von Magnetfeldsensoren (24a, 24b) mit einer zeitabhängigen sinusförmigen Funktion zu modulieren.

2. Drehpositionssensorvorrichtung nach Anspruch 1,
wobei das Magnetfeld (20) ein paralleles Magnetfeld ist.

3. Drehpositionssensorvorrichtung nach Anspruch 1 oder Anspruch 2, wobei der Magnet (18) entlang einer Achse magnetisiert ist, die in der Rotationsebene des Magnets (18) liegt.

4. Drehpositionssensorvorrichtung nach einem der Ansprüche 1 bis 3, wobei der Magnet (18) eine ebene Scheibe, ein Zylinder oder ein Ring ist.

5. Drehpositionssensorvorrichtung nach einem der Ansprüche 1 bis 4, wobei die sinusförmige Funktion von einem internen Oszillator oder von einer externen Erregungsquelle (28) bereitgestellt wird.

6. Drehpositionssensorvorrichtung nach einem der Ansprüche 1 bis 5, wobei der Magnet (18) um eine Rotationsachse (22) herum drehbar ist, wobei der Magnet (18) und die Magnetfeldsensoren (24a, 24b) des mindestens einen Paars von Magnetfeldsensoren in einer gemeinsamen Ebene positioniert sind oder über unterschiedliche Ebenen, die zueinander parallel sind, verteilt sind, wobei mindestens eine Ebene zu der Rotationsachse (22) rechtwinklig ist.

7. Drehpositionssensorvorrichtung nach einem der Ansprüche 1 bis 6, wobei die Drehpositionssensorvorrichtung ein erstes Paar von ersten und zweiten Magnetfeldsensoren (24a, 24b) und ein zweites Paar von ersten und zweiten Magnetfeldsensoren (32a, 32b) umfasst, wobei die ersten Magnetfeldsensoren (24a, 32a) des ersten und zweiten Paars sowie die zweiten Magnetfeldsensoren (24b, 32b) des ersten und zweiten Paars derart positioniert sind, dass sie zwei Paare von Signalen erzeugen, die mit Bezug zueinander invertiert sind.

8. Drehpositionssensorvorrichtung nach einem der Ansprüche 1 bis 7, wobei die Drehpositionssensorvorrichtung ein erstes Paar von ersten und zweiten Magnetfeldsensoren (24a, 24b) und ein zweites Paar von ersten und zweiten Magnetfeldsensoren (32a, 32b) umfasst, wobei die ersten Magnetfeldsensoren (24a, 32a) des ersten und zweiten Paars sowie die zweiten Magnetfeldsensoren (24b, 32b) des ersten und zweiten Paars zueinander diametral entgegengesetzt positioniert sind.

9. Drehpositionssensorvorrichtung nach Anspruch 7 oder Anspruch 8, wobei die elektronische Schaltung (14) ausgestaltet ist, um die Signale der ersten Magnetfeldsensoren (24a, 32a) voneinander zu subtrahieren, um ein erstes Differenzsignal zu erzeugen, und um die Signale der zweiten Magnetfeldsensoren (24b, 32b) voneinander zu subtrahieren, um ein zweites Differenzsignal zu erzeugen.

10. Drehpositionssensorvorrichtung nach Anspruch 9,
wobei die Magnetfeldsensoren (24a, 24b, 32a, 32b) der ersten und zweiten Paare in einer gemeinsamen Ebene positioniert sind, die zu der Rotationsachse (22) des Magnets (18) rechtwinklig ist und bei einem Abstand zu dem Magnet (18) liegt; und wobei jeder der Magnetfeldsensoren (24a, 24b, 32a, 32b) eine aktive Achse aufweist, die zu der Rotationsachse (22) des Magnets (18) parallel ist.

11. Drehpositionssensorvorrichtung nach Anspruch 9 oder Anspruch 10, wobei die elektronische Schaltung (14) ausgestaltet ist, um zuerst die zwei Differenzsignale zu erzeugen und um dann die zwei Differenzsignale zu modulieren, wobei insgesamt nur ein Paar modulierter Ausgabesignale auf der Basis der Signale der zwei Paare von Magnetfeldsensoren erzeugt wird.

12. Drehpositionssensorvorrichtung nach einem der Ansprüche 1 bis 11, wobei die Drehpositionssensorvorrichtung (10) derart ausgestaltet ist, dass jedes Paar einer Mehrzahl von Paaren von Magnetfeldsensoren (24a, 24b; 32a, 32b) ein Paar modulierter Ausgabesignale unabhängig voneinander erzeugt.

13. Vorrichtung, welche die Drehpositionssensorvorrichtung (10) nach einem der Ansprüche 1 bis 12 und einen Resolverwandler oder einen rotatorisch/linearen Umformerwandler (16) für variable Differenzen umfasst, wobei die Ausgabesignale der Drehpositionssensorvorrichtung direkt in den Wandler eingespeist werden.

14. Vorrichtung nach Anspruch 13,
wobei der Resolverwandler oder der rotatorisch/lineare Umformerwandler (16) für variable Differenzen ausgestaltet ist, um die Ausgabesignale der Drehpositionssensorvorrichtung zu demodulieren.

## Revendications

1. Dispositif capteur de position en rotation (10) comprenant :
un capteur de position en rotation (12) incluant
un aimant rotatif (18) qui crée un champ magnétique (20) ; et
au moins une paire formée d'un premier et d'un second capteur de champ magnétique périphérique (24a, 24b), les capteurs de champ magnétique de chaque paire étant décalés de 90° l'un par rapport à l'autre et produisant de signaux qui correspondent à des valeurs sinus et cosinus de la position en rotation (θ) de l'aimant ; et
un circuit électronique (14) configuré pour produire au moins une paire de signaux de sortie modulés,
**caractérisé en ce que** le circuit électronique (14) est en outre configuré pour moduler les deux signaux de chaque paire de capteurs de champ magnétique (24a, 24b) avec une fonction sinusoïdale dépendant du temps.

2. Dispositif capteur de position en rotation selon la revendication 1, dans lequel le champ magnétique (20) est un champ magnétique parallèle.

3. Dispositif capteur de position en rotation selon la revendication 1 ou 2, dans lequel l'aimant (18) est aimanté le long d'un axe situé dans le plan de rotation de l'aimant (18).

4. Dispositif capteur de position en rotation selon l'une quelconque des revendications 1 à 3, dans lequel l'aimant (18) et un disque plat, un cylindre ou un anneau.

5. Dispositif capteur de position en rotation selon l'une quelconque des revendications 1 à 4, dans lequel la fonction sinusoïdale est fournie par un oscillateur interne ou par une source d'excitation externe (28).

6. Dispositif capteur de position en rotation selon l'une quelconque des revendications 1 à 5, dans lequel l'aimant (18) est capable de rotation autour d'un axe de rotation (22), dans lequel l'aimant (18) et les capteurs de champ magnétique (24a, 24b) de ladite au moins une paire de capteurs de champ magnétique sont positionnés dans un plan commun ou sont distribués sur des plans différents qui sont parallèles les uns aux autres, ledit au moins un plan étant perpendiculaire à l'axe de rotation (22).

7. Dispositif capteur de position en rotation selon l'une quelconque des revendications 1 à 6, dans lequel le dispositif capteur de position en rotation comprend une première paire d'un premier et d'un second capteur de champ magnétique (24a, 24b), et une seconde paire d'un premier et d'un second capteur de champ magnétique (32a, 32b), dans lequel les premiers capteurs de champ magnétique (24a, 32a) de la première et de la seconde paire ainsi que les seconds capteurs de champ magnétique (24b, 32b) de la première et de la seconde paire sont positionnés de telle façon qu'ils produisent deux paires de signaux qui sont inversés l'un par rapport à l'autre.

8. Dispositif capteur de position en rotation selon l'une quelconque des revendications 1 à 7, dans lequel le dispositif capteur de position en rotation comprend une première paire d'un premier et d'un second capteur de champ magnétique (24a, 24b) et une seconde paire d'un premier et d'un second capteur de champ magnétique (32a, 32b), dans lequel les premiers capteurs de champ magnétique (24a, 32a) de la première et de la seconde paire ainsi que les seconds capteurs de champ magnétique (24b, 32b) de la première et de la seconde paire sont positionnés de manière diamétralement opposée les uns par rapport aux autres.

9. Dispositif capteur de position en rotation selon la revendication 7 ou 8, dans lequel le circuit électronique (14) est configuré pour soustraire les signaux des premiers capteurs de champ magnétique (24a, 32a) l'un de l'autre pour produire un premier signal différentiel et pour soustraire les signaux des seconds capteurs de champ magnétique (24b, 32b) l'un de l'autre pour produire un second signal différentiel.

10. Dispositif capteur de position en rotation selon la revendication 9, dans lequel les capteurs de champ magnétique (24a, 24b, 32a, 32b) de la première et de la seconde paire sont positionnés dans un plan commun qui est perpendiculaire à l'axe de rotation (22) de l'aimant (18) et qui est situé à une distance de l'aimant (18) ; et dans lequel chacun des capteurs de champ magnétique (24a, 24b, 32a, 32b) a un axe actif parallèle à l'axe de rotation (22) de l'aimant (18).

11. Dispositif capteur de position en rotation selon la revendication 9 ou 10, dans lequel le circuit électronique (14) est configuré pour produire en premier les deux signaux différentiels et pour moduler ensuite les deux signaux différentiels, et dans lequel au total uniquement une paire de signaux de sortie modulés est générée sur la base des signaux des deux paires de capteurs de champ magnétique.

12. Dispositif capteur de position en rotation selon l'une quelconque des revendications 1 à 11, dans lequel le dispositif capteur de position en rotation (10) est configuré de telle façon que chacun d'une pluralité de paires de capteurs de champ magnétique (24a, 24 ; 32a, 32b) produit une paire de signaux de sortie modulés indépendamment les uns des autres.

13. Appareil comprenant le dispositif capteur de position en rotation (10) selon l'une quelconque des revendications 1 à 12, et un convertisseur résolveur ou un convertisseur transformateur différentiel variable rotatif/linéaire (16), les signaux de sortie du dispositif capteur de position en rotation étant directement alimentés dans le convertisseur.

14. Appareil selon la revendication 13, dans lequel le convertisseur résolveur ou le convertisseur transformateur différentiel variable rotatif/linéaire (16) est configuré pour des moduler les signaux de sortie du dispositif capteur de position en rotation.
